# EUROPÄISCHE PATENTSCHRIFT

(11) **EP 2 857 742 B1**
(45) Veröffentlichungstag und Bekanntmachung des Hinweises auf die Patenterteilung: **27.05.2020**
(21) Anmeldenummer: 14186887.7
(22) Anmeldetag: 29.09.2014
(51) Int. Cl.: F21V 8/00

(54) **Lichtleiter für Kfz-Beleuchtungseinrichtung**
Light guide for motor vehicle lighting device
Conducteur lumineux pour dispositif d'éclairage de véhicule

(30) Priorität: 04.10.2013 DE 102013220122
(43) Veröffentlichungstag der Anmeldung: 08.04.2015
(73) Patentinhaber: Automotive Lighting Reutlingen GmbH, 72762 Reutlingen (DE)
(72) Erfinder: Zwick, Hubert, 70184 Stuttgart (DE)
(74) Vertreter: DREISS Patentanwälte PartG mbB

(56) Entgegenhaltungen:
- EP-A1- 0 495 273
- WO-A1-2005/101070
- WO-A1-2012/111079
- US-A1- 2005 237 763

## Beschreibung

Die Erfindung betrifft einen Lichtleiter für eine Beleuchtungseinrichtung eines Kraftfahrzeugs (Kfz) gemäß dem Oberbegriff des Anspruchs 1.

Solche Lichtleiter weisen einen Lichteinkoppelabschnitt und einen sich ausgehend von diesem erstreckenden Lichtleitabschnitt auf. Die den Lichtleitabschnitt begrenzenden Seitenflächen wirken bei derartigen Lichtleitern grundsätzlich als Lichtleitflächen, an welchen Licht, das durch den Lichteinkoppelabschnitt in den Lichtleitabschnitt einkoppelbar ist, unter interner Totalreflexion zwischen den Lichtleitflächen in den Lichtleitabschnitt geleitet werden kann.

Bei Verwendung derartiger Lichtleiter in einer Kfz-Beleuchtungseinrichtung ist es erwünscht, Licht in kontrollierter Weise aus dem Lichtleitabschnitt auszukoppeln, beispielsweise um eine gesetzlich vorgegebene Lichtverteilung zu erzielen.

Hierzu weisen bekannte Lichtleiter beispielsweise eine den Lichtleitabschnitt begrenzende Lichtauskoppelfläche auf, welche in der Regel dem Lichteinkoppelabschnitt gegenüberliegend angeordnet ist.

Außerdem ist es bekannt, an den begrenzenden Seitenflächen des Lichtleitabschnitts Auskoppelkörper anzuordnen, mittels welchen jeweils ein Anteil des in dem Lichtleitabschnitt geführten Lichts auskoppelbar ist. Diese Auskoppelkörper sind beispielsweise als an die Begrenzungsfläche angesetzte oder über die Begrenzungsfläche hervorstehende Körper ausgebildet, welche z.B. eine prismatische Form aufweisen. Die bekannten Auskoppelkörper weisen Oberflächen auf, die derart verlaufen, dass Lichtstrahlen, die aus dem Lichtleitabschnitt in den Auskoppelkörper eintreten, durch eine Oberfläche des Auskoppelkörpers austreten können, da dort die Bedingungen der Totalreflexion nicht mehr erfüllt sind. Bekannt sind außerdem Ausgestaltungen, bei denen an einer Oberfläche des Auskoppelkörpers eine Totalreflexion in Richtung zu einer dem Auskoppelkörper gegenüberliegenden Lichtaustrittsfläche des Lichtleitabschnitts erfolgt.

Die Anordnung von Auskoppelkörpern an den Seitenflächen des Lichtleitabschnitts ermöglicht es, Licht auch entlang der Erstreckung des Lichtleitabschnitts in definierter Weise auszukoppeln. Dadurch können die erwünschten Lichtverteilungen erzielt werden, insbesondere kann Licht auch in Richtung schräg oder senkrecht zur Erstreckung des Lichtleiters ausgekoppelt werden. Dies kann im Bereich der Kfz-Beleuchtungseinrichtungen aufgrund des beschränkten Bauraums oder zur Gestaltung eines vorteilhaften optischen Eindrucks erwünscht sein.
Die Herstellung von Lichtleitern mit derartigen Auskoppelkörpern ist jedoch nicht unproblematisch. Die Auskoppelkörper müssen in der Regel genau definierte geometrische Formen aufweisen und sind in aller Regel mit kleinen Abmessungen ausgeführt. An die Präzision des Herstellungsverfahrens sind daher hohe Anforderungen zu stellen. Da es sich um lokal begrenzte, über die Oberfläche hervortretende Objekte handelt, ist insbesondere eine Herstellung im Spritzgussverfahren mit erhöhtem Aufwand verbunden. Eine geringe Präzision in der Ausformung der Auskoppelkörper kann dazu führen, dass das ausgekoppelte Licht von der erwünschten Lichtverteilung abweicht.

Die US 2005 23 77 63 A1, EP 0 495 273 A1 und WO 2005 101070 A1 zeigen Lichtleiter mit gebogenen oder gewellten Bereichen zur Auskopplung von Licht.

Die Aufgabe der Erfindung besteht darin, einen Lichtleiter bereitzustellen, aus welchem Licht auch entlang der Erstreckung des Lichtleiters an gewünschten Positionen ausgekoppelt werden kann und der eine vereinfachte Herstellung und Verwendung im Hinblick auf die oben genannten Probleme ermöglicht.

Diese Aufgabe wird durch einen Lichtleiter mit den Merkmalen des Anspruchs 1 gelöst.

Der Lichtleiter weist einen Lichteinkoppelabschnitt und einen sich ausgehend von diesem länglich und/oder flächig entlang einer Leitkurve erstreckenden Lichtleitabschnitt auf. Der Lichtleitabschnitt ist von einer ersten und von einer zweiten Seitenfläche begrenzt. Die Seitenflächen erstrecken sich jeweils ausgehend von dem Lichteinkoppelabschnitt entlang der Leitkurve und liegen einander in Bezug auf den Lichtleitabschnitt gegenüber. Die Seitenflächen sind derart geformt und angeordnet, dass Licht, welches durch den Lichteinkoppelabschnitt in den Lichtleitabschnitt eingekoppelt ist, zumindest teilweise unter interner Totalreflexion zwischen den Seitenflächen in den Lichtleitabschnitt geleitet werden kann.

Grundlegender Gedanke der Erfindung ist es, den Lichtleitabschnitt als Ganzes betrachtet, entlang seines Verlaufs ausgehend von dem Lichteinkoppelabschnitt zumindest abschnittsweise gewellt auszugestalten. Hierzu weist der Lichtleitabschnitt entlang seines Verlaufs entlang der Leitkurve ausgehend von dem Lichteinkoppelabschnitt wenigstens einen Wellenabschnitt auf. In dem Wellenabschnitt verlaufen sowohl die erste Seitenfläche, als auch die dieser gegenüberliegende zweite Seitenfläche beide in ihrer Erstreckung entlang der Leitkurve derart gewellt, dass ein Anteil des in dem Lichtleitabschnitt nach Einkopplung durch den Lichteinkoppelabschnitt geleiteten Lichts durch die erste oder die zweite Seitenfläche des Wellenabschnitts auskoppelbar ist.

Eine gewellte Fläche wird im vorliegenden Zusammenhang dadurch gebildet, dass die Fläche entlang ihrer Erstreckungsrichtung eine Krümmung aufweist, die von einer Krümmungsrichtung in die entgegengesetzte Krümmungsrichtung übergeht, d. h. ihre Krümmungsrichtung ändert.

Die gewellte Form der Seitenflächen in dem Wellenabschnitt ermöglicht es, Licht in kontrollierter Weise aus dem Lichtleiterabschnitt auszukoppeln. Hierbei ist es nicht erforderlich, Auskoppelkörper an die Seitenfläche anzusetzen. Die eingangs angesprochenen Probleme aufgrund der hohen Präzisionsanforderungen an die Auskoppelkörper können daher vermieden werden. Im Bereich des Wellenabschnitts ist der Lichtleiterabschnitt als Ganzes gewellt, weist jedoch keine lokal begrenzten, über die Oberfläche hervorstehenden Auskoppelkörper auf. Diese Formgebung vereinfacht die Herstellung des Lichtleiters, beispielsweise im Spritzgussverfahren. Der Lichtleiter kann daher kostengünstig hergestellt werden.

Die Seitenflächen wirken grundsätzlich als Lichtleitfläche. Im Bereich des Wellenabschnitts findet jedoch eine kontrollierte Auskopplung statt. Durch die Richtungs- und Krümmungsänderung der Seitenflächen im Wellenabschnitt ist für einen bestimmten Anteil eines in dem Lichtleitabschnitt geleiteten Lichtbündels die Bedingung der Totalreflexion an der jeweiligen Seitenfläche nicht mehr erfüllt. Dieser Anteil des Lichtbündels wird durch die Seitenfläche des Wellenabschnitts ausgekoppelt. Der Richtungs- und Krümmungsverlauf der Seitenflächen sowie die Ausgestaltung des Lichtleitabschnitts im Bereich des Wellenabschnitts ermöglichen es also, die ausgekoppelte Lichtmenge, den Öffnungswinkel des ausgekoppelten Lichtbündels sowie die Orientierung des ausgekoppelten Lichtbündels in Bezug auf die Seitenflächen einzustellen. Die Formgebung des Wellenabschnitts kann daher so gewählt werden, dass bei Verwendung des Lichtleiters in einer Beleuchtungseinrichtung eine gewünschte Lichtverteilung erzielbar ist.
In dem Wellenabschnitt verlaufen die erste Seitenfläche und die zweite Seitenfläche, entlang ihres Verlaufs von dem Lichteinkoppelabschnitt weg, d. h. entlang der Leitkurve, beide mit einer gleichsinnigen Krümmung. Die erste Seitenfläche und die zweite Seitenfläche weisen daher in ihrem Verlauf von dem Lichteinkoppelabschnitt weg jeweils dieselbe Krümmungsrichtung auf.

Die erste und/oder die zweite Seitenfläche verläuft dabei in Schnitten senkrecht zu der Leitkurve betrachtet konvex, d.h. in Schnitten senkrecht zur Leitkurve bauchartig in Bezug auf den Lichtleitabschnitt nach außen gewölbt. In Schnitten senkrecht zu der Leitkurve sind die erste und die zweite Seitenfläche dann nicht mehr parallel. Allerdings verlaufen die beiden Seitenflächen vorzugsweise derart, dass die Parallelität in Schnitten entlang der Leitkurve betrachtet erhalten bleibt. Durch die konvexe Wölbung kann Licht mit einer gewünschten Divergenz in Richtungen senkrecht zu der Leitkurve aus dem Lichtleitabschnitt ausgekoppelt werden, was zur Erzeugung gesetzlich vorgegebener Lichtverteilungen erwünscht sein kann.

Der Wellenabschnitt umfasst vorzugsweise einen Umlenkbereich und einen sich entlang der Erstreckung des Lichtleitabschnitts in Richtung von dem Lichteinkoppelabschnitt weg entlang der Leitkurve hieran anschließenden Auskoppelbereich. Die erste und die zweite Seitenfläche ändern in ihrem Verlauf zwischen dem Umlenkbereich und dem Auskoppelbereich ihre Krümmungsrichtung derart, dass ein Anteil des in dem Lichtleitabschnitt leitbaren Lichts durch die Seitenflächen des Auskoppelbereichs auskoppelbar ist. Die Seitenflächen verlaufen insofern derart, dass für einen Anteil des in dem Lichtleitabschnitt leitbaren Lichts, welches in dem Auskoppelbereich auf die erste oder zweite Seitenfläche trifft, die Bedingung der Totalreflexion nicht mehr erfüllt ist.

Der Umlenkbereich ist grundsätzlich dazu ausgebildet, Licht in dem Lichtleitabschnitt durch Totalreflexion zu leiten und gegebenenfalls die Richtung des Lichtes umzulenken. Im Umlenkbereich bilden die Seitenflächen daher Lichtleitflächen. Der Auskoppelbereich dient zur Auskopplung des Lichts in den gewünschten Positionen entlang des Lichtleitabschnitts und mit einer gewünschten Lichtverteilung. In dem Auskoppelbereich bildet daher zumindest eine Seitenfläche eine Lichtaustrittsfläche.

In dem Wellenabschnitt weisen die erste und die zweite Seitenfläche in ihrem Verlauf entlang der Leitkurve vorzugsweise einen Wendepunkt auf, welcher zwischen dem Umlenkbereich und dem Auskoppelbereich liegt bzw. den Übergang zwischen diesen beiden Bereichen definiert. In dem Wellenabschnitt schließt sich der Auskoppelbereich vorzugsweise unmittelbar an den Umlenkbereich an.

Um die Auskopplung von Licht zu bewirken, weisen die Seitenflächen in dem Auskoppelbereich vorzugsweise eine betragsmäßig stärkere Krümmung auf, als in dem Umlenkbereich. Dabei ist die Krümmung in dem Auskoppelbereich entgegengesetzt zur Krümmung in dem Umlenkbereich.

Zur Charakterisierung der Krümmung kann der Krümmungsradius der jeweiligen Seitenfläche herangezogen werden. Insbesondere kann hierzu ein Krümmungskreis entlang der Hauptausbreitungsrichtung des Lichts bzw. der Leitkurve betrachtet werden. Der Krümmungsradius der Seitenfläche ist in dem Auskoppelbereich insbesondere kleiner als in dem Umlenkbereich. Die Krümmung ist in dem Auskoppelbereich insbesondere so stark, dass für einen Anteil des in dem Lichtleitabschnitt nach Einkopplung durch den Lichteinkoppelabschnitt geleiteten Lichts die Bedingung der Totalreflexion an der ersten bzw. zweiten Seitenfläche nicht mehr erfüllt ist. Die Krümmung in dem Umlenkbereich ist demgegenüber so gewählt, dass noch eine Totalreflexion erfolgt.

Als vorteilhaft hat sich herausgestellt, wenn der Krümmungsradius (in Bezug auf die Krümmung im Verlauf entlang der Leitkurve) in dem Umlenkbereich des Wellenabschnitts zumindest das Sechsfache der Dicke des Lichtleitabschnitts in Richtung senkrecht zur Leitkurve oder das Sechsfache der Wandstärke des Lichtleitabschnitts in Richtung senkrecht zu seiner Erstreckungsfläche betragt.

Der Wellenabschnitt umfasst grundsätzlich zwei Bereiche - Umlenkbereich und Auskoppelbereich - mit betragsmäßig verschiedener und entgegengesetzter Krümmung der Seitenflächen, wobei sich die zwei Bereiche entlang des Verlaufs des Lichtleitabschnitts in Richtung ausgehend von dem Lichteinkoppelabschnitt (und entlang der Leitkurve) aneinander anschließen. In dem Wellenabschnitt kann nach dem Auskoppelbereich ein Übergangsbereich folgen, welcher eine Krümmung der gleichen Richtung wie der Auskoppelbereich aufweist, in welchem jedoch die Krümmung schwächer ist. Der Übergangsbereich liegt auf der dem Umlenkbereich gegenüberliegenden Seite des Auskoppelbereichs. Dadurch kann ein Übergang von dem stark gekrümmten Auskoppelbereich zu dem weiteren Lichtleitabschnitt oder zu einem weiteren Wellenabschnitt bereitgestellt werden. Der Wellenabschnitt ist vorzugsweise durch dieses Grundelement definiert, das aus Umlenkbereich, Auskoppelbereich und gegebenenfalls Übergangsbereich gebildet ist.

Die erste und die zweite Seitenfläche des Lichtleitabschnitts verlaufen vorzugsweise in Schnitten entlang der Leitkurve betrachtet parallel zueinander. Insofern verlaufen die erste und zweite Seitenfläche derart, dass der Lichtleitabschnitt jeweils in zumindest einem gegebenen Schnitt entlang der Leitkurve (d. h. entlang seiner Erstreckung ausgehend von dem Lichteinkoppelabschnitt) eine konstante Dicke aufweist. Nach einem vorteilhaften Aspekt der Erfindung weisen die erste und die zweite Seitenfläche in dem Wellenabschnitt einen Krümmungsverlauf derart auf, dass ein durch den Lichteinkoppelabschnitt eingekoppeltes Lichtbündel, das durch die jeweilige Seitenfläche ausgekoppelt wird, Randstrahlen aufweist, die im Austrittspunkt tangential zu der jeweiligen Seitenfläche verlaufen. Insbesondere tritt das Licht durch die Seitenfläche in dem Auskoppelbereich aus und die Randstrahlen verlaufen parallel zu der Seitenfläche in dem Auskoppelbereich.

Um diesen zu erreichen, verlaufen die erste und die zweite Seitenfläche vorzugsweise derart, dass Lichtbündel, die nach Einkopplung durch den Lichteinkoppelabschnitt in dem Lichtleitabschnitt geleitet werden, mit einem Öffnungswinkel auf die Seitenfläche in dem Auskoppelbereich auftreffen, wobei dieser Öffnungswinkel derart groß ist, dass für einen Teil des Lichtbündels die Bedingung der Totalreflexion nicht erfüllt ist und für den anderen Fall des Lichtbündels die Bedingung der Totalreflexion noch erfüllt ist. Der austretende Teil des Lichtbündels verläuft dann mit Randstrahlen parallel zu der Seitenfläche in der Position der Auskopplung.

Nach einer vorteilhaften Ausgestaltung der Erfindung weist der Lichtleitabschnitt eine Mehrzahl von Wellenabschnitten auf, die sich entlang der Erstreckung des Lichtleitabschnitts, insbesondere entlang der Leitkurve, aneinander anschließen. Dabei schließen sich die Wellenschnitte vorzugsweise unmittelbar aneinander an. Insbesondere schließt sich entlang der Erstreckung des Lichtleitabschnitts in Richtung von dem Lichteinkoppelabschnitt weg entlang der Leitkurve der Umlenkbereich eines folgenden Wellenabschnitts unmittelbar an den Auskoppelbereich des jeweils vorhergehenden Wellenabschnitts an. Durch geeignete Ausgestaltung und Anzahl der Wellenabschnitte lässt sich entlang der Erstreckung des Lichtleitabschnitts eine gewünschte Lichtverteilung auskoppeln.

Die aufeinanderfolgenden Wellenabschnitte können identisch ausgebildet sein. Insbesondere kann die erste bzw. zweite Seitenfläche in den verschiedenen, aufeinanderfolgenden Wellenabschnitten jeweils denselben Verlauf aufweisen.

Die Seitenflächen können in verschiedenen Wellenabschnitten jedoch auch verschiedene Verläufe aufweisen. Durch die Ausgestaltung der Seitenflächen kann die erzielbare, ausgekoppelte Lichtverteilung maßgeschneidert werden.

Zum weiteren Ausgestaltung kann der Lichteinkoppelabschnitt eine Lichteinkoppelfläche zum Einkoppeln von Licht und wenigstens zwei sich ausgehend von der Lichteinkoppelfläche zu dem Lichtleitabschnitt erstreckende Lichtleitflächen aufweisen, welche zur Leitung des eingekoppelten Lichts unter interner Totalreflexion an den Lichtleitflächen ausgebildet sind. Vorteilhaft ist insbesondere, wenn diese Lichtleitflächen in Richtung von der Lichteinkoppelfläche zu dem Lichtleitabschnitt hin auseinanderlaufen, derart, dass der zur Lichtleitung wirksame Querschnitt sich beim Fortschreiten von dem Lichteinkoppelabschnitt zu dem Lichtleitabschnitt vergrößert. Dadurch kann nach Einkopplung durch die Lichteinkoppelfläche das in dem Lichteinkoppelabschnitt geführte licht kollimiert werden, da bei mehrfacher Totalreflexion zwischen den Begrenzungsflächen der Reflexionswinkel an den Seitenflächen immer kleiner wird.

Da durch die genannte Maßnahme der Bündelöffnungswinkel der in dem Lichtleitabschnitt geführtem Lichtbündel verkleinert wird, kann für die Seitenflächen in den Wellenabschnitt eine vergleichsweise stärkere Krümmung vorgesehen sein, ohne dass es zu einer unerwünschten Auskopplung kommt. Insbesondere kann auch der Umlenkbereich des Wellenbereichs stärker gekrümmt sein. Dadurch kann die notwendige Ausdehnung des Wellenabschnitts verringert werden, und es können Wellenabschnitte in kürzerem Abstand entlang der Leitkurve aufeinanderfolgen.

Zur weiteren Ausgestaltung kann der Lichteinkoppelabschnitt mehrere, separate Einleitkörper mit je einer Lichteinkoppelfläche aufweisen. Die Einleitkörper verlaufen ausgehend von ihrer jeweiligen Lichteinkoppelfläche jeweils separat voneinander und münden gemeinsam in den Lichtleitabschnitt. Insbesondere ist eine Mehrzahl von identisch ausgebildeten Einleitkörpern vorgesehen, die im Wesentlichen parallel zueinander verlaufen und gemeinsam in den Lichtleitabschnitt münden. Dies ermöglicht es in vorteilhafter Weise, das Licht mehrerer Lichtquellen in dem Lichtleitabschnitt einzukoppeln. Die verschiedenen Lichtquellen, beispielsweise LEDs, können zum Beispiel Licht unterschiedlicher Farbe abgeben, so dass mehrere Leuchtfunktionen mit unterschiedlichen Lichtfarben bereitgestellt werden können (z. B. Scheinwerfer mit weißem Tagfahrlicht und Blinklichtfunktion mit gelbem Licht).

Weitere Einzelheiten und vorteilhafte Ausgestaltungen der Erfindung werden im Folgenden unter Bezugnahme auf die Figuren näher beschrieben und erläutert.

Es zeigen:
- Figur 1:: Perspektivische Darstellung eines Vergleichsbeispiels eines Lichtleiters in Einbausituation in einer Kfz-Beleuchtungseinrichtung;
- Figur 2:: Lichtleiter aus Figur 1 in Draufsicht;
- Figur 3:: Detaildarstellung zur Erläuterung des Verlaufs der Seitenflächen in Figur 1 und Figur 2;
- Figur 4:: ein weiteres Vergleichsbeispiel eines Lichtleiters
- Figuren 5 und 6:: Darstellungen zur Erläuterung einer erfindungsgemäßen Ausgestaltung eines Lichtleiters;
- Figur 7:: eine weiteres Vergleichsbeispiel eines
- Lichtleiters: in Seitenansicht auf eine Seitenfläche.

Zur besseren Übersichtlichkeit sind in der nachfolgenden Beschreibung und in den Figuren für identische oder einander entsprechende Merkmale jeweils dieselben Bezugszeichen verwendet.

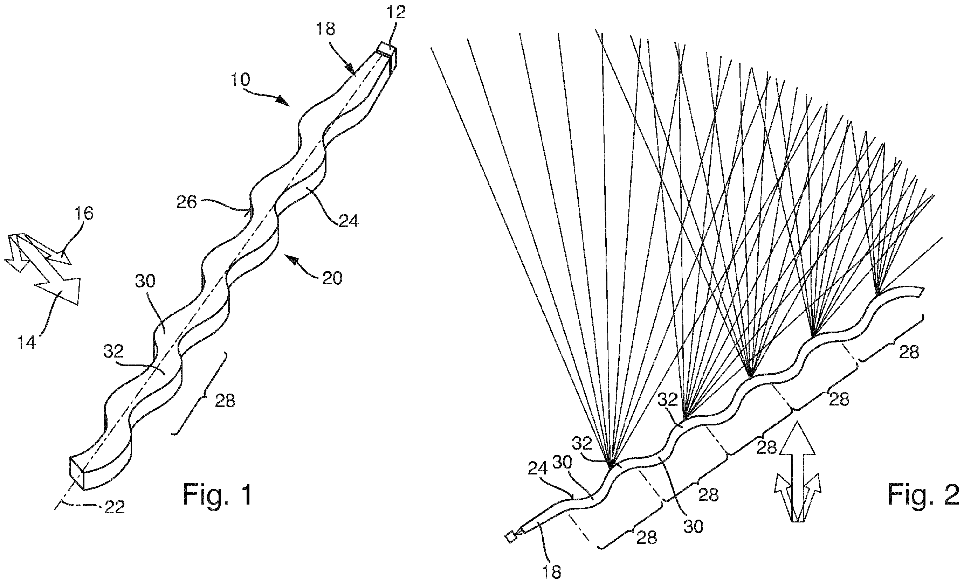

Die Figuren 1 und 2 zeigen ein Vergleichsbeispiel eines Lichtleiters 10. Zur Veranschaulichung der Einbaulage des Lichtleiters 10 in einer Kfz-Beleuchtungseinrichtung ist eine Lichtquelle 12 skizziert und eine gewünschte Hauptabstrahlrichtung 14 mit einem großen Pfeil angedeutet. Die Hauptabstrahlrichtung 14 entspricht beispielsweise der Standardfahrtrichtung eines Kraftfahrzeuges. Zusätzlich sind Nebenabstrahlrichtungen 16 um die Hauptabstrahlrichtung 14 mittels kleineren Pfeilen angedeutet. Im dargestellten Beispiel soll mit dem Lichtleiter 10 eine gesetzlich vorgegebene Lichtverteilung erzeugt werden, die beispielsweise um die Hauptabstrahlrichtung 14 konzentriert ist und seitlich durch die Nebenabstrahlrichtungen 16 begrenzt ist.

Der Lichtleiter umfasst einen Lichteinkoppelabschnitt 18, welcher derart der Lichtquelle 12 zugewandt ist, dass das von der Lichtquelle 12 abstrahlbare Licht in den Lichteinkoppelabschnitt 18 einkoppelbar ist. Ausgehend von dem Lichteinkoppelabschnitt 18 erstreckt sich ein Lichtleitabschnitt 20 in Richtung von dem Lichteinkoppelabschnitt 18 weg. Der dargestellte Lichtleiter 10 weist im Ganzen betrachtet eine stabförmige Ausgestaltung auf und erstreckt sich entlang einer als gerade verlaufenden Leitkurve 22.

In lateraler Richtung (bezüglich der Erstreckung des Lichtleitabschnitts 20) ist der Lichtleitabschnitt 20 von einer ersten Seitenfläche 24 und einer zweiten Seitenfläche 26 begrenzt. Die erste Seitenfläche 24 und die zweite Seitenfläche 26 liegen sich gegenüber, d. h. begrenzen den Lichtleitabschnitt 20 in entgegengesetzten (lateralen) Richtungen. Die Seitenflächen 24 und 26 verlaufen im dargestellten Beispiel ausgehend von dem Lichteinkoppelabschnitt 18 parallel zu einander. Dies ist jedoch in dieser Allgemeinheit nicht zwingend (siehe unten).

Der Lichtleitabschnitt 20 ist im dargestellten Beispiel als Ganzes betrachtet gewellt ausgebildet. Hierzu weist der Lichtleitabschnitt 20 entlang seines Verlaufs ausgehend von dem Lichteinkoppelabschnitt 18 eine Mehrzahl an Wellenabschnitten 28 auf. Nach einem allgemeinen Aspekt der Erfindung wird ein Wellenabschnitt dadurch gebildet, dass die erste Seitenfläche 24 und auch die zweite, dieser gegenüberliegende Seitenfläche 26 beide in ihrer Erstreckung entlang der Leitkurve einen gewellten Verlauf, vorzugsweise einen S-förmigen Verlauf aufweisen.

Wird das von der Lichtquelle 12 ausgestrahlte Licht durch den Lichteinkoppelabschnitt 18 in den Lichtleitabschnitt 20 eingekoppelt, so kann in jedem Wellenabschnitt 28 ein erwünschter Anteil des in den Lichtleitabschnitt 20 geleiteten Lichts ausgekoppelt werden. Dies ist in der Figur 2 erkennbar.

In jedem Wellenabschnitt 28 wird ein Anteil des in dem Lichtleitabschnitt geleiteten Lichts durch die im dargestellten Beispiel erste Seitenfläche 24 ausgekoppelt. Je nach Ausgestaltung des Wellenabschnitts 28 kann eine Auskopplung jedoch stattdessen auch durch die zweite Seitenfläche 26 oder durch beide Seitenflächen 24 und 26 erfolgen.

Jeder Wellenabschnitt 28 umfasst einen Umlenkbereich 30, sowie einen Auskoppelbereich 32. Der Auskoppelbereich 32 schließt sich entlang der Erstreckung des Lichtleitabschnitts 20 an den Umlenkbereich 30 an.

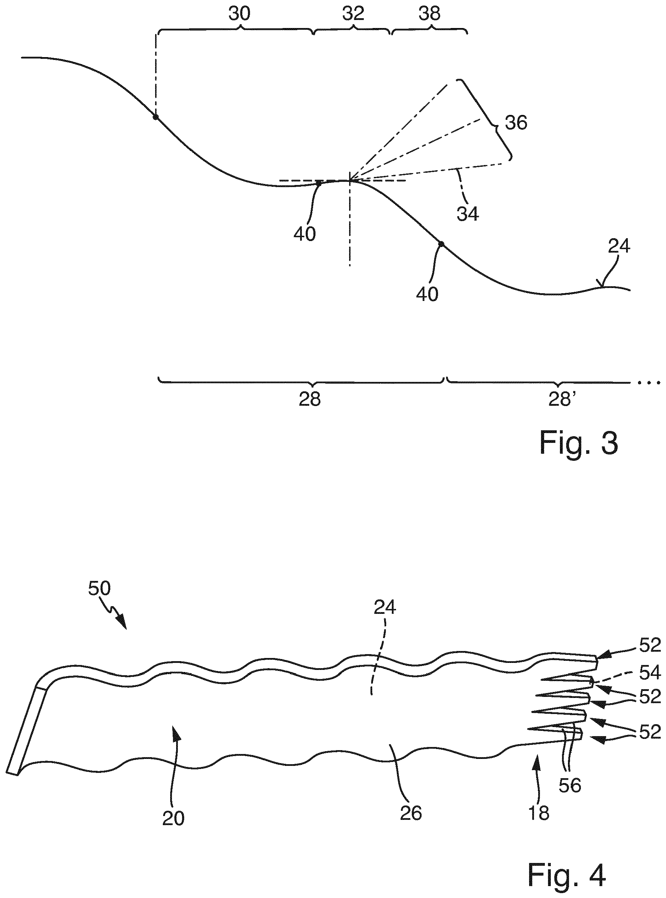

In dem Wellenabschnitt 28 weisen die erste Seitenfläche 24 und die zweite Seitenfläche 26 einen Verlauf mit Krümmungswechsel auf. Beide Seitenflächen 24 und 26 ändern in ihrem Verlauf zwischen dem Umlenkbereich 30 und dem Auskoppelbereich 32 ihre Krümmungsrichtung, wie nachfolgend zu Figur 3 noch näher erläutert.
Nach einem grundlegenden Aspekt der Erfindung sind die erste Seitenfläche 24 und die zweite Seitenfläche 26 entlang ihres Verlaufs von dem Lichteinkoppelabschnitt 18 weg in jedem Wellenabschnitt 28 jeweils gleichsinnig gekrümmt, d.h. der Krümmungsrichtungsverlauf ist für die erste und die zweite Seitenfläche parallel, d. h. die erste Seitenfläche 24 und die zweite Seitenfläche 26 weisen jeweils eine Krümmung in dieselbe Richtung auf.

Die Figur 3 visualisiert exemplarisch den Verlauf der ersten Seitenfläche 24 in einem Wellenabschnitt 28. Hierzu ist die erste Seitenfläche 24 in einem Schnitt senkrecht zu ihrer Erstreckung dargestellt. Die Darstellung ist entsprechend auf die zweite Seitenfläche 26 übertragbar.

In dem Umlenkbereich 30 des Wellenabschnitts 28 weist die Seitenfläche 24 in ihrem Verlauf ausgehend von dem Lichteinkoppelabschnitt 18 beispielsweise eine positive Krümmung auf. Beim Übergang von dem Umlenkbereich 30 zu dem Auskoppelbereich 32 wechselt die Krümmungsrichtung der Seitenfläche 24, so dass die Seitenfläche 24 in dem Auskoppelbereich 32 eine negative Krümmung aufweist. Grundsätzlich ist dabei die Seitenfläche 24 in dem Auskoppelbereich 32 betragsmäßig stärker gekrümmt als in dem Umlenkbereich 30. Der Krümmungsradius der Seitenfläche 24 in der Darstellung der Figur 3 ist daher in dem Auskoppelbereich 32 wesentlich kleiner als in dem Umlenkbereich 30.
Dies führt dazu, dass für in den Lichtleitabschnitt 20 geleitete Lichtstrahlen die Bedingung der Totalreflexion an der ersten Seitenfläche 24 in dem Auskoppelbereich 32 nicht mehr erfüllt ist. Solche Lichtstrahlen treten daher in dem Auskoppelbereich 32 aus dem Lichtleitabschnitt 20 aus. Da die Krümmung der Seitenfläche 24 am Übergang zwischen dem Umlenkbereich 30 und dem Auskoppelbereich 32 ihr Vorzeichen ändert, weist der Verlauf der Seitenfläche 24 in Schnitten entlang der Leitkurve 22 einen Wendepunkt 40 auf (Figur 3). Ebenso wechselt die Krümmung der Seitenfläche 24 beim Übergang zwischen dem Übergangsbereich 38 und dem Umlenkbereich eines folgenden Wellenabschnitts 28' ihr Vorzeichen, so dass ein Wendepunkt 40 gebildet wird.

Die Ausgestaltung des Lichtleitabschnitts 20 und der Seitenflächen 24 bzw. 26 in dem Wellenabschnitt 28 ist derart gewellt, dass die durch die Seitenfläche 24 bzw. 26 ausgekoppelten Lichtbündel Randstrahlen 34 aufweisen, die in dem Auskoppelbereich 32 tangential zu der Seitenfläche 24 bzw. 26 verlaufen (siehe Figur 3). Der Lichtleiter 10 ist bei Verwendung in einer Beleuchtungseinrichtung derart orientiert, dass die tangential austretenden Randstrahlen 34 mit einer Nebenabstrahlrichtung 16 zusammenfallen, so dass das durch den Auskoppelbereich 32 austretende Lichtbündel 36 (vgl. Figur 3) um die Hauptabstrahlrichtung 14 konzentriert ist.

Wie in der Figur 3 erkennbar, kann sich in dem Wellenabschnitt 28 an den Auskoppelbereich 32 in entgegengesetzter Richtung zu dem Umlenkbereich 30 ein Übergangsbereich 38 anschließen, in welchem die Seitenfläche 24 eine schwächere Krümmung aufweist, als in dem Auskoppelbereich 32. Dadurch kann der Übergang zu einem nachfolgenden Wellenabschnitt hergestellt werden. In dem Übergangsbereich 38 ist die Seitenfläche 24 gleichsinnig gekrümmt wie in dem Auskoppelbereich 32, weist also eine Krümmung mit einer Krümmungsrichtung auf, die der Krümmungsrichtung in dem Umlenkbereich 30 entgegengesetzt ist. Allerdings ist die Krümmung in dem Übergangsbereich 38 betragsmäßig geringer als in dem Auskoppelbereich 32, so dass für die in dem Lichtleitabschnitt 20 geleiteten Lichtstrahlen die Bedingung der Totalreflexion erfüllt ist, wenn sie auf die Seitenfläche 24 in dem Übergangsbereich 38 treffen.

Die Figur 4 zeigt ein Vergleichsbeispiel eines Lichtleiters 50 mit einem sich flächig erstreckendem, dünnwandigen Lichtleitabschnitt 20. Wie bereits zu dem Lichtleiter 10 erläutert, verlaufen die erste Seitenfläche 24 und die zweite Seitenfläche 26 derart, dass aufeinanderfolgende Wellenabschnitte gebildet werden. Im Unterschied zu dem Lichtleiter 10 weist der Lichteinkoppelabschnitt 18 des Lichtleiters 50 eine Mehrzahl von separaten Einleitkörpern 52 mit je einer Lichteinkoppelfläche 54 auf. Ausgehend von der jeweiligen Lichteinkoppelfläche 54 verlaufen die Einleitkörper 52 separat und münden gemeinsam in den Lichtleitabschnitt 20. Jeder Einleitkörper 52 ist von Lichtleitflächen 56 begrenzt, die von der Lichteinkoppelfläche 54 derart zu dem Lichtleitabschnitt 20 verlaufen, dass der Einleitkörper 52 in dem Lichtleitabschnitt 20 übergeht.

Nach einer vorteilhaften Ausgestaltung verlaufen die Lichtleitflächen 56 ausgehend von der Lichteinkoppelfläche 54 in Richtung zu dem Lichtleitabschnitt 20 hin auseinander. Dadurch kann das durch die Lichteinkoppelfläche 54 eingekoppelte Licht in dem Lichteinkoppelabschnitt 18 kollimiert werden. Diese Ausgestaltung kann bei sämtlichen Ausführungsformen der Erfindung, also auch bei Lichtleitern mit nur einem Lichteinkoppelabschnitt vorteilhaft sein.

Die Lichteinkoppelkörper 52 können, wie in Figur 4 dargestellt, identisch ausgebildet sein und beabstandet voneinander verlaufen. Dadurch sind die jeweiligen Lichteinkoppelflächen 54 ebenfalls beabstandet voneinander. Dies ermöglicht es, Licht unterschiedlicher Lichtquellen (in Figur 4 nicht dargestellt) durch die jeweils zugeordneten Lichteinkoppelflächen 54 in den Lichtleiter einzukoppeln. Die unterschiedlichen Lichtquellen können unabhängig voneinander ansteuerbar sein, so dass unterschiedliche Lichtfunktionen bereitgestellt werden können.

Um der ausgekoppelten Lichtverteilung eine kontrollierte Divergenz in Schnitten senkrecht zur Erstreckungsrichtung des Lichtleitabschnitts zu geben, verläuft die erste Seitenfläche 24 und/oder die zweite Seitenfläche 26 in Schnitten senkrecht zu der Leitkurve 22 konvex gewölbt.

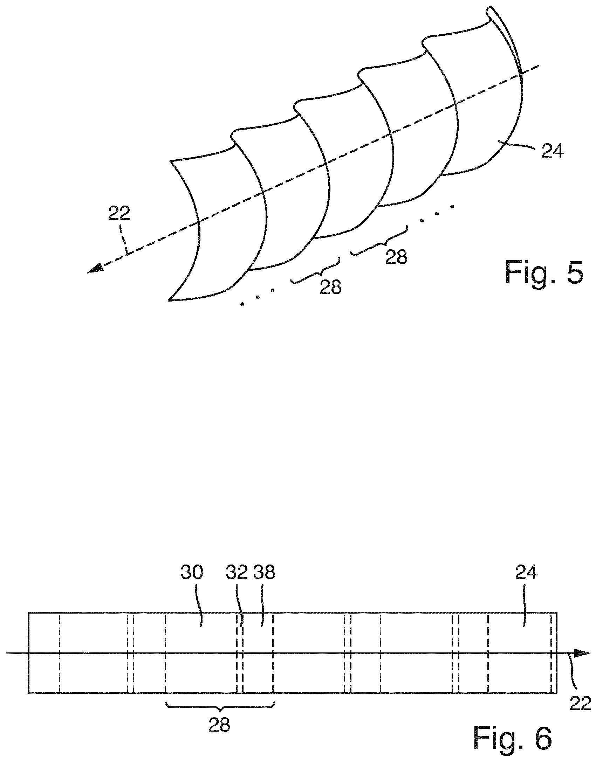

Dies ist in der Figur 5 skizziert. In jedem Wellenabschnitt 28 verlaufen bei einer derartigen Ausgestaltung die erste Seitenfläche 24 und die zweite Seitenfläche 26 im Schnitten entlang der Leitkurve 22 betrachtet parallel zueinander, jedoch in Schnitten senkrecht zu der Leitkurve 22 betrachtet aufgrund der konvexen Wölbung nicht parallel zueinander.

Die Figur 6 zeigt eine Draufsicht auf die erste Seitenfläche 24 gemäß Figur 5. In jedem Wellenabschnitt 28 schließen sich der Umlenkbereich 30, der Auskoppelbereich 32 und der Übergangsbereich 38 entlang der Leitkurve 22 aneinander an. Je zwischen zwei aneinander anschließenden Bereichen ändert sich qualitativ die Krümmung der Seitenfläche 24 entlang der Leitkurve 22. Dies ist in Figur 6 durch gestrichelte Linien angedeutet. Am Übergang zwischen dem Umlenkbereich 30 und dem Auskoppelbereich 32 ändert die Krümmung der Seitenfläche 24 ihr Vorzeichen. In Schnitten entlang der Leitkurve 22 liegt somit ein Wendepunkt vor. Am Übergang zwischen dem Auskoppelbereich 32 und dem Übergangsbereich 38 ändert sich die Krümmungsrichtung nicht, jedoch nimmt der Betrag der Krümmung ab.

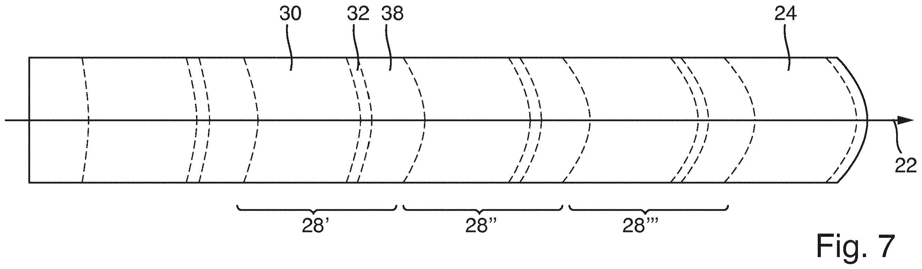

Die Figur 7 zeigt eine Draufsicht auf die Seitenfläche 24 eines Vergleichsbeispiels eines Lichtleiters in einer der Figur 6 entsprechenden Darstellung, um eine weitere Ausgestaltungsmöglichkeit zu erläutern. Wiederum folgen entlang der Leitkurve 22 mehrere Wellenabschnitte 28', 28", 28''' usw. aufeinander. Bei der gezeigten Ausgestaltung nimmt die Amplitude und/oder die Wellenlänge des Wellenverlaufs der Seitenflächen 24 (und entsprechend der Seitenfläche 26) in jedem Wellenabschnitt 28 ausgehend von einer Mittellinie der Seitenfläche nach lateral außen hin kontinuierlich ab. Dadurch kann der Anteil des Ausgekoppelten Lichts in den lateralen Bereichen zu der Mittellinie angepasst werden. Die mit gestrichelt angedeuteten Grenzen zwischen Umlenkbereich 30, Auskoppelbereich 32 und Übergangsbereich 38 verlaufen bei dieser Ausgestaltung ausgehend von der Mittellinie gekrümmt nach lateral außen. Wie in Figur 6 deuten diese Linien zwischen dem Umlenkbereich 30 und dem Auskoppelbereich 32 einen Krümmungswechsel in Form eines Wendepunktes an, bzw. zwischen dem Auskoppelbereich 32 und dem Übergangsbereich 38 eine Änderung des Grades der Krümmung unter Beibehaltung der Krümmungsrichtung an.

## Patentansprüche

1. Lichtleiter (10, 50) für Kfz-Beleuchtungseinrichtungen, mit einem Lichteinkoppelabschnitt (18) und einem sich ausgehend von dem Lichteinkoppelabschnitt (18) entlang einer Leitkurve (22) erstreckenden Lichtleitabschnitt (20), welcher von einer ersten Seitenfläche (24) und einer zweiten Seitenfläche (26) begrenzt ist, welche sich jeweils ausgehend von dem Lichteinkoppelabschnitt (18) erstrecken und gegenüberliegend zueinander verlaufen, wobei der Lichtleitabschnitt (20) wenigstens einen Wellenabschnitt (28) aufweist, in welchem die erste (24) und die zweite Seitenfläche (26) in ihrer Erstreckung entlang der Leitkurve (22) derart gewellt verlaufen, dass ein Anteil von in dem Lichtleitabschnitt (20) leitbaren Lichts durch die erste (24) oder die zweite Seitenfläche (26) des Wellenabschnitts (28) auskoppelbar ist, wobei in dem Wellenabschnitt (28) die erste Seitenfläche (24) und die zweite Seitenfläche (26) entlang ihres Verlaufs entlang der Erstreckung des Lichtleitabschnitts (20) jeweils gleichsinnig gekrümmt sind, dadurch charakterisiert dass die erste (24) und/oder die zweite Seitenfläche (26) in Schnitten senkrecht zur Leitkurve (22) betrachtet konvex verläuft.

2. Lichtleiter (10, 50) nach Anspruch 1, **dadurch gekennzeichnet, dass** der Wellenabschnitt (28) einen Umlenkbereich (30) und einen sich hieran entlang der Leitkurve (22) anschließenden Auskoppelbereich (32) umfasst, wobei die erste (24) und die zweite Seitenfläche (26) in ihrem Verlauf zwischen dem Umlenkbereich (30) und dem Auskoppelbereich (32) ihre Krümmung derart ändern, und insbesondere ihre Krümmungsrichtung umkehren, dass ein Anteil des in dem Lichtleitabschnitt (20) leitbaren Lichts durch den Auskoppelbereich auskoppelbar ist.

3. Lichtleiter (10, 50) nach dem vorherigen Ansprüche, **dadurch gekennzeichnet, dass** die Seitenflächen (24, 26) in dem Auskoppelbereich (32) eine betragsmäßig stärkere Krümmung aufweisen, als in dem Umlenkbereich (30).

4. Lichtleiter (10, 50) nach einem der vorherigen Ansprüche, **dadurch gekennzeichnet, dass** die erste (24) und zweite Seitenfläche (26) in Schnitten entlang der Leitkurve (22) betrachtet parallel zueinander verlaufen.

5. Lichtleiter (10, 50) nach einem der vorherigen Abschnitte, **dadurch gekennzeichnet, dass** die erste (24) und die zweite Seitenfläche (26) in dem Wellenabschnitt (28) einen Krümmungsverlauf derart aufweisen, dass das durch die Seitenfläche (24, 26) ausgekoppelte Lichtbündel Randstrahlen (34) aufweist, die im Austrittspunkt tangential zu der Seitenfläche (24, 26) verlaufen.

6. Lichtleiter (10, 50) nach einem der vorherigen Ansprüche, **dadurch gekennzeichnet, dass** der Lichtleitabschnitt (20) eine Mehrzahl von Wellenabschnitten (28, 28', 28", 28'") aufweist, welche sich entlang der Erstreckung des Lichtleitabschnitts (20) aneinander anschließen.

7. Lichtleiter (10, 50) nach dem vorherigen Ansprüche, **dadurch gekennzeichnet, dass** die erste (24) und die zweite Seitenfläche (26) in den aufeinanderfolgenden Wellenabschnitten (28) jeweils denselben Verlauf aufweisen.

8. Lichtleiter (50) nach einem der vorherigen Ansprüche, **dadurch gekennzeichnet, dass** der Lichteinkoppelabschnitt (20) eine Lichteinkoppelfläche (54) und wenigstens zwei von der Lichteinkoppelfläche (54) zu dem Lichtleitabschnitt (20) verlaufende Lichtleitflächen (56) aufweist, wobei die Lichtleitflächen (56) in Richtung von der Lichteinkoppelfläche (54) zu dem Lichtleitabschnitt (20) auseinanderlaufen.

## Claims

1. Light guide (10, 50) for motor vehicle illuminating devices, comprising a light coupling-in portion (18) and a light guiding portion (20) which extends from the light coupling-in portion (18) along a guide curve (22) and is delimited by a first side surface (24) and a second side surface (26), which side surfaces each extend from the light coupling-in portion (18) and extend opposite one another, the light guiding portion (20) having at least one wave portion (28) in which the first (24) and the second side surfaces (26) extend in a waved manner along the guide curve (22) such that part of the light that can be guided in the light guiding portion (20) can be coupled out through the first (24) or the second side surface (26) of the wave portion (28), the first side surface (24) and the second side surface (26) each being, in the wave portion (28), curved in the same direction along their course along the extension of the light guiding portion (20), **characterized in that** the first (24) and/or the second side surface (26) is convex when viewed in sections perpendicular to the guide curve (22).

2. Light guide (10, 50) according to claim 1, **characterized in that** the wave portion (28) comprises a deflection region (30) and a coupling-out region (32) adjoining said deflection region along the guide curve (22), the curvature of the first (24) and the second side surfaces (26) between the deflection region (30) and the coupling-out region (32) changing, and in particular the direction of curvature of said surfaces reversing, such that part of the light that can be guided in the light guiding portion (20) can be coupled out via the coupling-out region.

3. Light guide (10, 50) according to the preceding claims, **characterized in that** the side surfaces (24, 26) in the coupling-out region (32) have a greater curvature than in the deflection region (30).

4. Light guide (10, 50) according to any of the preceding claims, **characterized in that** the first (24) and second side surfaces (26) extend in parallel with one another when viewed in sections along the guide curve (22).

5. Light guide (10, 50) according to any of the preceding parts, **characterized in that** the first (24) and the second side surfaces (26) in the wave portion (28) have a curvature such that the light bundle coupled out through the side surface (24, 26) has marginal rays (34) which extend tangentially to the side surface (24, 26) at the exit point.

6. Light guide (10, 50) according to any of the preceding claims, **characterized in that** the light guiding portion (20) comprises a plurality of wave portions (28, 28', 28'', 28''') which adjoin one another along the extension of the light guiding portion (20).

7. Light guide (10, 50) according to the preceding claims, **characterized in that** the first (24) and the second side surfaces (26) in the successive wave portions (28) each have the same course.

8. Light guide (50) according to any of the preceding claims, **characterized in that** the light coupling-in portion (20) has a light coupling-in surface (54) and at least two light guiding surfaces (56) extending from the light coupling-in surface (54) to the light guiding portion (20), the light guiding surfaces (56) diverging in the direction from the light coupling-in surface (54) to the light guiding portion (20).

## Revendications

1. Guide de lumière (10, 50) pour des dispositifs d'éclairage de véhicule à moteur, avec une section d'injection de lumière (18) et une section de guidage de lumière (20), s'étendant à partir de la section d'injection de lumière (18) le long d'une courbe de guidage (22), laquelle est délimitée par une première surface latérale (24) et une deuxième surface latérale (26), lesquelles s'étendent respectivement à partir de la section d'injection de lumière (18) et s'étendent à l'opposé l'une de l'autre, dans lequel la section de guidage de lumière (20) présente au moins une section ondulée (28), dans laquelle la première (24) et la deuxième surface latérale (26) s'étendent de manière ondulée dans leur étendue le long de la courbe de guidage (22), de telle sorte qu'une part de la lumière pouvant être guidée dans la section de guidage de lumière (20) peut être extraite par la première (24) ou la deuxième surface latérale (26) de la section ondulée (28), dans lequel,
dans la section ondulée (28), la première surface latérale (24) et la deuxième surface latérale (26) sont courbées respectivement dans le même sens le long de leur tracé le long de l'étendue de la section de guidage de lumière (20),
**caractérisé en ce que** la première (24) et/ou la deuxième surface latérale (26) s'étendent de manière convexe vues en coupes perpendiculairement à la courbe de guidage (22) .

2. Guide de lumière (10, 50) selon la revendication 1, **caractérisé en ce que** la section ondulée (28) comprend une zone de déviation (30) et une zone d'extraction (32) se raccordant à celle-ci le long de la courbe de guidage (22), dans lequel la première (24) et la deuxième surface latérale (26) modifient leur courbure dans leur tracé entre la zone de déviation (30) et la zone d'extraction (32), et inversent en particulier leur direction de courbure, de telle sorte qu'une part de la lumière pouvant être guidée dans la section de guidage de lumière (20) peut être extraite par la zone d'extraction.

3. Guide de lumière (10, 50) selon la revendication précédente, **caractérisé en ce que** les surfaces latérales (24, 26) présentent dans la zone d'extraction (32) une courbure de grandeur plus élevée que dans la zone de déviation (30).

4. Guide de lumière (10, 50) selon l'une quelconque des revendications précédentes, **caractérisé en ce que** la première (24) et deuxième surface latérale (26) s'étendent parallèlement l'une à l'autre vues en coupes le long de la courbe de guidage (22).

5. Guide de lumière (10, 50) selon l'une quelconque des revendications précédentes, **caractérisé en ce que** la première (24) et la deuxième surface latérale (26) présentent dans la section ondulée (28) un tracé de courbure de telle sorte que le faisceau lumineux extrait par la surface latérale (24, 26) présente des rayons de bord (34), qui s'étendent dans le point de sortie de manière tangentielle par rapport à la surface latérale (24, 26).

6. Guide de lumière (10, 50) selon l'une quelconque des revendications précédentes, **caractérisé en ce que** la section de guidage de lumière (20) présente une pluralité de sections ondulées (28, 28', 28'', 28'''), lesquelles se raccordent les unes aux autres le long de l'étendue de la section de guidage de lumière (20).

7. Guide de lumière (10, 50) selon la revendication précédente, **caractérisé en ce que** la première (24) et la deuxième surface latérale (26) présentent dans les sections ondulées (28) successives respectivement le même tracé.

8. Guide de lumière (10, 50) selon l'une quelconque des revendications précédentes, **caractérisé en ce que** la section d'injection de lumière (20) présente une surface d'injection de lumière (54) et au moins deux surfaces de guidage de lumière (56) s'étendant de la surface d'injection de lumière (54) à la section de guidage de lumière (20), dans lequel les surfaces de guidage de lumière (56) se séparent dans une direction allant de la surface d'injection de lumière (54) à la section de guidage de lumière (20).
